# EUROPEAN PATENT SPECIFICATION

(11) **EP 2 964 907 B1**
(45) Date of publication and mention of the grant of the patent: **30.10.2019**
(21) Application number: 13821635.3
(22) Date of filing: 30.12.2013
(51) Int. Cl.: F01D 25/16, F02C 7/06, F16C 25/06, F01D 5/10, F01D 25/04, F04D 29/66, F01D 11/02, F01D 11/24, F02C 7/28, F16C 37/00, F04D 29/059, F16C 19/52, F01D 11/00, F04D 29/10

(54) **GAS TURBINE ENGINE CLEARANCE CONTROL**
GASTURBINENTRIEBWERK MIT SPALTREGELUNG
MOTEUR À TURBINE À GAZ DOTÉ D'UNE COMMANDE DE JEUX

(30) Priority: 07.03.2013 US 201361774283 P
(43) Date of publication of application: 13.01.2016
(73) Proprietor: Rolls-Royce Corporation, Indianapolis, Indiana 46225 (US); Rolls-Royce North American Technologies, Inc., Indianapolis, IN 46241 (US)
(72) Inventor: BURNS, Donald W., Avon, Indiana 46123 (US); VETTERS, Daniel K., Indianapolis, Indiana 46234 (US); ROEVER, Douglas M., Indianapolis, Indiana 46228 (US)
(74) Representative: Dauncey, Mark Peter
(86) International application number: PCT/US2013/078206
(87) International publication number: WO 2014/137465

(56) References cited:
- WO-A1-2008/041919
- WO-A1-2013/141938
- FR-A1- 2 943 717
- JP-A- 2008 157 340
- US-A1- 2012 192 572

## Description

### TECHICAL FIELD

The present disclosure relates to clearance control in rotor machines such as gas turbine engines.

### BACKGROUND

Rotor machines, such as gas turbine engines and other rotor machines that effectively control clearances, such as bearing clearances, damper clearances and seal clearances, remain an area of interest. Some existing systems have various shortcomings, drawbacks, and disadvantages relative to certain applications. Accordingly, there remains a need for further contributions in this area of technology.

### SUMMARY

In accordance with one aspect of the invention, a gas turbine engine is provided as set forth in claim 1. In accordance with another aspect of the invention, a method for operating a gas turbine engine is provided as set forth in claim 8. Further embodiments, forms, features, aspects, benefits, and advantages of the present application will become apparent from the description and figures provided herewith. These and other features of the present disclosure will become more apparent from the following description of the illustrative embodiments.

### BRIEF DESCRIPTION OF THE FIGURES

The description herein makes reference to the accompanying drawings wherein like reference numerals refer to like parts throughout the several views, and wherein:
Fig. 1 schematically illustrates some aspects of a non-limiting example of a gas turbine engine;
Fig. 2 schematically illustrates some aspects of a non-limiting example of a bearing system;
Fig. 3 schematically illustrates some aspects of a damping system in accordance with the present invention; and
Fig. 4 schematically illustrates some aspects of a non-limiting example of a sealing system.

### DETAILED DESCRIPTION OF REPRESENTATIVE EMBODIMENTS

For purposes of promoting an understanding of the principles of the invention, reference will now be made to the embodiments illustrated in the drawings, and specific language will be used to describe the same. It will nonetheless be understood that no limitation of the scope of the invention is intended by the illustration and description of certain embodiments of the invention. In addition, any alterations and/or modifications of the illustrated and/or described embodiment(s) are contemplated as being within the scope of the present invention. Further, any other applications of the principles of the invention, as illustrated and/or described herein, as would normally occur to one skilled in the art to which the invention pertains, are contemplated as being within the scope of the present invention.

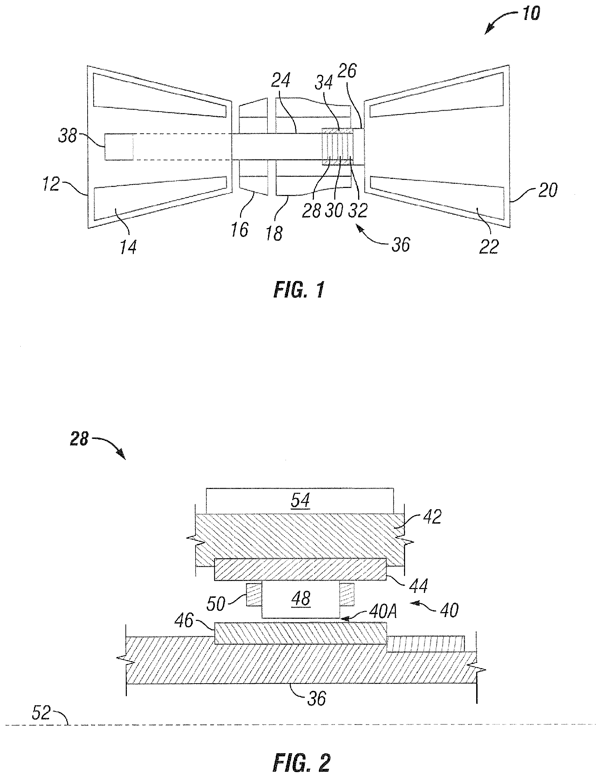

Referring to the drawings, and in particular, FIG. 1, some aspects of a non-limiting example of a rotor machine in accordance with an embodiment of the present invention are schematically depicted. In one form, the rotor machine is a gas turbine engine, referred to herein as gas turbine engine 10. In other embodiments, the rotor machine may be any rotor machine having a rotor and at least one of a bearing system, a damping system and a sealing system, such as, for example and without limitation, a pump or a compressor. In one form, gas turbine engine 10 is an axial flow machine, e.g., an air-vehicle power plant. In other embodiments, gas turbine engine 10 may be a radial flow machine or a combination axial-radial flow machine. It will be understood that the present invention is equally applicable to various gas turbine engine configurations, for example, including turbojet engines, turbofan engines, turboprop engines, and turboshaft engines having axial, centrifugal and/or axicentrifugal compressors and/or turbines, as well as hybrid engines.

In one form, gas turbine engine 10 includes a compressor 12 having a plurality of blades and vanes 14, a diffuser 16, a combustor 18, a turbine 20 having a plurality of blades and vanes 22, a shaft 24 coupling compressor 12 with turbine 20, and a system 26. In one form, system 26 includes a bearing system 28, a damping system 30 and a sealing system 32. In one form, bearing system 28, damping system 30 and sealing system 32 are disposed within a sump housing 34. In other embodiments, system 26 may include only one or two of bearing system 28, damping system 30 and sealing system 32. In various embodiments, one or more of bearing system 28, damping system 30 and sealing system 32 may not be located within sump housing 34. In the depiction of FIG. 1, bearing system 28, damping system 30 and sealing system 32 are illustrated as being in a side-by-side relationship. However, it will be understood that this illustration is by way of example only, and is not intended to reflect any particular orientation or location of bearing system 28, damping system 30 and sealing system 32 in an absolute sense or relative to one another.

Combustor 18 is in fluid communication with compressor 12 and turbine 20. Turbine 20 is drivingly coupled to compressor 12 via shaft 24. Turbine 20 is supported by bearing system 28. Although only a single spool is depicted, it will be understood that the present invention is equally applicable to multi-spool engines. The number of stages of blades and vanes 14 of compressor 12, and the number of blades and vanes 22 of turbine 20 may vary with the application, e.g., the power output requirements of a particular installation of gas turbine engine 10. In various embodiments, gas turbine engine 10 may include one or more fans, additional compressors and/or additional turbines.

During the operation of gas turbine engine 10, air is received at the inlet of compressor 12. Blades and vanes 14 compress the air received at the inlet of compressor 12. Diffuser 16 is positioned downstream of compressor 12. Diffuser 16 reduces the velocity of the pressurized air discharged from compressor 12. After having been compressed and diffused, the air is discharged from diffuser 16 into combustor 18. The pressurized air is then mixed with fuel and combusted in combustor 18. The hot gases exiting combustor 18 are directed into turbine 20. Turbine 20 extracts energy from the hot gases to, among other things, generate mechanical shaft power to drive compressor 12 via shaft 24. In one form, the hot gases exiting turbine 20 are directed into a nozzle (not shown), and provide a thrust output for gas turbine engine 10.

Compressor 12, turbine 20 and shaft 24 form a rotor 36. In one form, shaft 24 is coupled to both compressor 12 and turbine 20. In other embodiments, shaft 24 may be coupled to only one of compressor 12 and turbine 20, and may be integral with the other. In still other embodiments, shaft 24 may be integral with both compressor 12 and turbine 20. In yet other embodiments, rotor 36 may be formed by other components in addition to or in place of compressor 12, turbine 20 and shaft 24. For example, in some embodiments, one or more fan stages and/or additional compressor and/or turbine stages may be considered part of rotor 36 in addition to or in place of one or more of compressor 12, turbine 20 and shaft 24. In some embodiments, one or more other rotors may be employed in addition to or in place of rotor 36, e.g., in single or multi-spool gas turbine engines or other types of rotor machines.

Bearing system 28 is operative to react and transmit rotor loads from a rotor to another structure. In one form, bearing system 28 is operative to react and transmit loads from rotor 36 to a static engine structure. In other embodiments, bearing system 28 may be operative to react and transmit loads from a rotor to another component, which may be or include another rotor, e.g., such as an inter-shaft bearing system for transmitting loads from one rotor to another rotor. Rotor loads may include radial and thrust loads resulting from rotor weight and inertial loading, as well as pressure/thrust loading and dynamic loading. In the illustrated example, bearing system 28 reacts radial loads from an aft portion of rotor 36, e.g., primarily loads associated with turbine 20, whereas another bearing system 38 supports a forward portion of rotor 36, e.g., primarily compressor 12 loads, and reacts rotor 36 radial and thrust loads from the forward portion of rotor 36. In other embodiments, bearing system 28 may support compressor 12 in addition to or in place of turbine 20 and/or other rotor 36 components (not shown). In one or more of various embodiments, bearing system 28 may react radial and/or thrust loads for all or part of any rotor system, e.g., fan, compressor and/or turbine rotors, of a gas turbine engine such as engine 10, or any rotor system of any machine.

Damping system 30 is configured to damp rotor 36 oscillations, e.g., during startup and operation of engine 10 as rotor 36 passes through critical frequencies, and oscillations due to rotor 36 unbalance and/or other dynamic loading. In one form, damping system 30 is a squeeze film damping system. In other embodiments, damping system 30 may be one or more of any other type of damping system configured to damp rotor 36 oscillations in addition to or in place of a squeeze film damping system.

In one form, sealing system 32 is a labyrinth seal system configured to reduce or prevent the flow of gases and/or liquids into or out of sump housing 34. In other embodiments, sealing system 32 may be configured to reduce or prevent the flow of gases and/or liquids into or out of any other part of engine 10 or any rotor machine. In various embodiments, sealing system 32 may be another type of sealing system, e.g., a carbon ring sealing system or other type of sealing system.

Referring to Fig. 2, some aspects of a non-limiting example of bearing system 28 in accordance with an exemplary embodiment are schematically depicted. Bearing system 28 includes a rolling element bearing in the form of a roller bearing 40 disposed within a structure 42. In other embodiments, other types of bearings, rolling element or otherwise, may be employed. Bearing 40 includes an outer race 44, an inner race 46, a plurality of rollers 48 and a separator 50. Bearing 40 rotates about a centerline 52, e.g., a centerline of engine 10. Outer race 44 is piloted by structure 42. In one form, structure 42 is a bearing housing configured to house bearing 40. In one form, the bearing housing is a portion of sump housing 34. In other embodiments, the bearing housing may not be a part of sump housing 34 and/or may be contained within sump housing 34. In some embodiments, structure 42 may be, may include or may be coupled to a damper, such as a squeeze film damper. In one form, inner race 46 is mounted on and piloted by a portion of rotor 36, e.g., a portion of shaft 24. In other embodiments, one or more intervening components may be disposed between rotor 36 and inner race 46.

In one form, mounted on or in structure 42 is a thermoelectric module (TEM) 54. TEM 54 is coupled to a controllable power supply (not shown) configured to supply power to TEM 54. In one form, TEM 54 is a Peltier device. In other embodiments, other TEM types may be employed. In one form, TEM 54 is configured to selectively provide and extract heat to/from outer race 44, e.g., via structure 42, or to neither provide nor extract heat, e.g., by supplying electrical power to TEM 54 in a first direction, a second direction, or by not supplying electrical power, respectively. In other embodiments, TEM 54 may be configured to selectively provide heat only or not provide heat, or may be configured or to selectively extract heat or not extract heat, respectively, to/from outer race 44.

Bearing 40 operates with bearing internal clearance 40A, e.g., defined by the diameter of outer race 44 adjacent to rollers 48, the diameter of rollers 48 and the diameter of inner race 46 adjacent to rollers 48. The internal clearance of bearing 40 controls, in part, the tip clearance between rotating engine 10 components, such as, for example and without limitation, compressor and/or turbine blades, and static engine 10 components, such as compressor and/or turbine blade tracks. By controlling the diameter of one or both of outer race 44 and inner race 46, the bearing internal clearance 40A of bearing 40 may be altered to control bearing life and vibration, and to control tip clearance. In one form, TEM 54 is configured to achieve a desired value for bearing internal clearance 40A by changing a diameter of outer race 44, e.g., by supplying or extracting heat from outer race 44 during the operation of engine 10 to increase or reduce bearing internal clearance 40A. In other embodiments, TEM 54 or another TEM may be positioned and configured to change the diameter of inner race 46 in addition to or in place of changing the diameter of outer race 44. In one form, TEM 54 is controlled by the controllable power supply to achieve a desired bearing internal clearance 40A during the operation of engine 10.

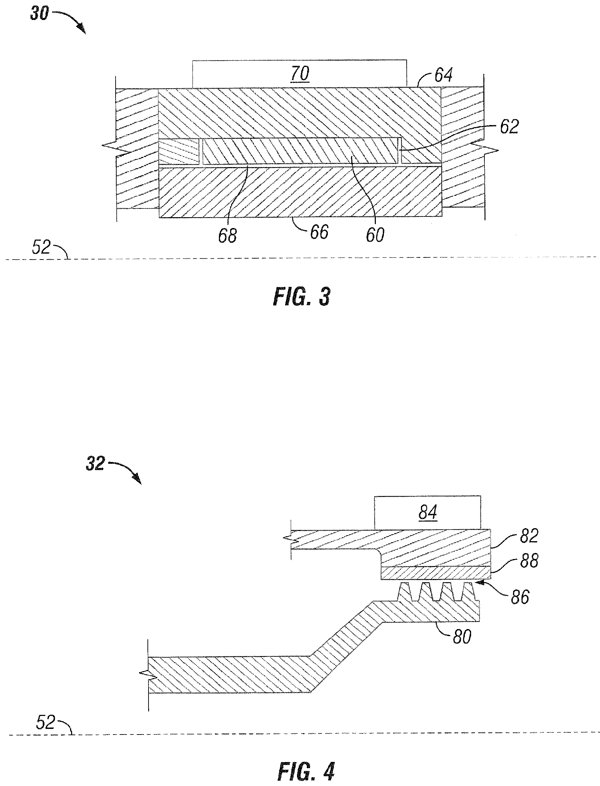

Referring now to FIG. 3, some aspects of a damping system 30 in accordance with the present invention are schematically depicted. The damping system 30 includes a damper in the form of a damper ring 60 disposed within a damper gland 62. In one form, damper gland 62 is defined diametrically by a structure 64 and a structure 66, which, in conjunction with the inner and outer diameters of damper ring 60 form a damper clearance 68. The damping characteristics of damping system 30 are generated, at least in part, by the size, e.g., radial extents, of damper clearance 68. In one form, structure 64 is a bearing housing, and structure 66 is a bearing coupled to rotor 36, e.g., bearing 40. In other embodiments, structure 64 and structure 66 may take other forms. In various forms, structure 66 may be located in the same axial plane as bearing 40 or another bearing, or may be located in a different axial location than bearing 40 or another bearing. In one form, the bearing housing is a portion of sump housing 34. In other embodiments, the bearing housing may not be a part of sump housing 34.

In accordance with the invention, mounted on or in structure 64 is a thermoelectric module (TEM) 70. In various embodiments, TEM 70 may be all or a portion of TEM 54, or may be a separate TEM. TEM 70 is coupled to a controllable power supply (not shown) configured to supply power to TEM 70. In one form, TEM 70 is a Peltier device. In other embodiments, other TEM types may be employed. In one form, TEM 70 is configured to selectively provide and extract heat to/from structure 64, which in various embodiments may also selectively provide and extract heat from damper ring 60 and structure 66; or to neither provide nor extract heat, e.g., by supplying electrical power to TEM 70 in a first direction, a second direction, or by not supplying electrical power, respectively. In other embodiments, TEM 70 may be configured to selectively provide heat only or not provide heat, or may be configured or to selectively extract heat or not extract heat, respectively, to/from structure 64, damper ring 60 and/or structure 66.

Damper clearance 68 controls, in part, the tip clearance between rotating engine 10 components, such as, for example and without limitation, compressor and/or turbine blades, and static engine 10 components, such as compressor and/or turbine blade tracks. In addition, as set forth above, damper clearance 68 controls, at least in part, the damping characteristics of damping system 30. By controlling damper clearance 68, the damping characteristics of damping system 30, and tip clearances may be controlled. In various embodiments, TEM 70 is configured to achieve a desired value for damper clearance 68 by changing a diameter of structure 64 and/or structure 66, and hence damper gland 62; and/or changing a diameter of damper ring 60 during the operation of engine 10 to increase or reduce the damper clearance 68. In one form, TEM 70 is controlled by a controllable power supply (not shown) to achieve the desired damper clearance 68 during the operation of engine 10. In one form, TEM 70 is configured to eliminate damper clearance 68 during the operation of engine 10, e.g., thus preventing the damping of rotor 36 at selected engine 10 operating conditions. In one form, TEM 70 is configured to control the size of damper clearance 68 during operation of the gas turbine engine to achieve a desired damping level of rotor 36.

Referring to FIG. 4, some aspects of a non-limiting example of sealing system 32 in accordance with an exemplary embodiment are schematically depicted. In one form, sealing system 32 includes rotating seal component 80, a stationary seal component 82, and a TEM 84. Seal component 80 and seal component 82 form therebetween a seal clearance 86. In some embodiments, seal clearance 86 may be formed between two rotating seal components. In some embodiments, seal component 82 may include an abradable portion 88. The sealing characteristics of sealing system 32 are controlled, at least in part, by the size, e.g., radial extents, of seal clearance 86. In one form, seal component 82 extends from sump housing 34. In other embodiments, seal component 82 may be a portion of or extend from another portion of engine 10.

In one form, TEM 84 is mounted on or in seal component 82. In other embodiments, TEM 84 may be location in another position. In some embodiments, TEM 84 or another TEM may be mounted on or in seal component 80 in addition to or in place of seal component 82. TEM 84 is coupled to a controllable power supply (not shown) configured to supply power to TEM 84. In one form, TEM 84 is a Peltier device. In other embodiments, other TEM types may be employed. In one form, TEM 84 is configured to selectively provide and extract heat to/from seal component 82, or to neither provide nor extract heat, e.g., by supplying electrical power to TEM 70 in a first direction, a second direction, or by not supplying electrical power, respectively. In other embodiments, TEM 70 may be configured to selectively provide heat only or not provide heat, or may be configured or to selectively extract heat or not extract heat, respectively, to/from seal component 82.

By controlling seal clearance 86, the leakage characteristics of sealing system 32 may be controlled. In various embodiments, TEM 84 is configured to achieve a desired value for seal clearance 86 by changing the inner diameter seal of component 82 to increase or reduce seal clearance 86. In other embodiments, TEM 84 may be configured to increase or reduce seal clearance 86 by changing the tip diameter of seal component 80 in addition to or in place of seal component 82. In one form, TEM 84 is controlled by a controllable power supply (not shown) to achieve a desired seal clearance 86 during the operation of engine 10.

Examples of the present disclosure include a gas turbine engine, comprising: a rotor; at least one of: a bearing system having a bearing with bearing race and a bearing internal clearance; a damper system having a damper disposed in a damper gland and having a damper clearance; and a sealing system having a sealing component and a seal clearance; and at least one thermoelectric module configured to achieve a desired value for at least one of the bearing internal clearance, the damper clearance and the seal clearance by changing a diameter of at least one of the bearing race, the damper, the damper gland and the sealing component during operation of the gas turbine engine.

In a refinement, the at least one thermoelectric module is configured to change a diameter of the bearing race by selectively heating and cooling the bearing race.

In another refinement, the bearing is a rolling element bearing.

In yet another refinement, the bearing is a roller bearing.

In still another refinement, the bearing race is an outer bearing race.

In yet still another refinement, the gas turbine engine further comprises a bearing housing configured to house the bearing, wherein the at least one thermoelectric module is mounted on or in the bearing housing.

In a further refinement, the damper is a squeeze film damper configured to damp rotor oscillations based at least in part on a size of the damper clearance.

In a yet further refinement, the at least one thermoelectric module is configured to eliminate the damper clearance during operation of the gas turbine engine.

In a still further refinement, the at least one thermoelectric module is configured to control the damper clearance during operation of the gas turbine engine to achieve a desired damping level.

In a yet still further refinement, the sealing system is a labyrinth seal system.

In another further refinement, the sealing component is a stationary seal of the labyrinth seal system.

In yet another further refinement, the gas turbine engine further comprises at least a second thermoelectric module configured to achieve the desired value for at least another of the bearing internal clearance, the damper clearance and the seal clearance by changing a diameter of at least one of the bearing race, the damper, the damper gland and the sealing component during operation of the gas turbine engine.

Embodiments of the present invention include a method for operating a gas turbine engine, as defined in claim 8.

In another refinement, the method further comprises controlling at least one thermoelectric module to change the diameter of a damping system to eliminate the damper clearance at at least one selected operating point of the gas turbine engine.

In yet another refinement, the method further comprises controlling at least one thermoelectric module to change the diameter of a damping system to achieve a desired damper clearance at at least one selected operating point of the gas turbine engine.

While the invention has been described in connection with what is presently considered to be the most practical and preferred embodiment, it is to be understood that the invention is not to be limited to the disclosed embodiment(s), but on the contrary, is intended to cover various modifications and equivalent arrangements included within the scope of the appended claims, which scope is to be accorded the broadest interpretation so as to encompass all such modifications and equivalent structures as permitted under the law. Furthermore it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. A gas turbine engine (10), comprising:
a rotor;
a damper system (30) configured to damp rotor oscillations, the damper system (30) having a damper (60) disposed in a damper gland (62) and having a damper clearance (68);
at least one thermoelectric module (70) configured to achieve a desired value for the damper clearance by changing a diameter of the damper and the damper gland during operation of the gas turbine engine.

2. The gas turbine engine of claim 1, wherein the damper gland is defined diametrically by a first structure (64) and a second structure (66), and the at least one thermoelectric module is configured to change the damper clearance by selectively heating and cooling the first structure, the damper, and/or the second structure.

3. The gas turbine engine of claim 1, wherein the damper is a squeeze film damper configured to damp rotor oscillations based at least in part on a size of the damper clearance.

4. The gas turbine engine of claim 3, wherein the at least one thermoelectric module is configured to eliminate the damper clearance during operation of the gas turbine engine.

5. The gas turbine engine of claim 3, wherein the at least one thermoelectric module is configured to control the damper clearance during operation of the gas turbine engine to achieve a desired damping level.

6. The gas turbine engine of claim 1, wherein the gas turbine engine further comprises:
a bearing system (28) having a bearing (40) with a bearing race (44) and a bearing internal clearance (40A), and
a second thermoelectric module (54) configured to achieve a desired value for the bearing internal clearance by changing a diameter of the bearing race during operation of the gas turbine engine.

7. The gas turbine engine of claim 1, wherein the gas turbine engine further comprises:
a sealing system (32) having a sealing component (82) and a seal clearance, and
a second thermoelectric module (84) configured to achieve a desired value for the seal clearance by changing a diameter of the sealing component during operation of the gas turbine engine.

8. A method for operating a gas turbine engine, comprising:
controlling at least one thermoelectric module (70) to achieve a desired value for a damper clearance (68) by changing a diameter of a damper (60) and a damper gland (62) during operation of the gas turbine engine.

9. The method of claim 8, wherein the damper gland is defined diametrically by a first structure (64) and a second structure (66), and wherein controlling the at least one thermoelectric module to achieve a desired value for the damper clearance is achieved by selectively heating and cooling the first structure, the damper, and/or the second structure.

10. The method of claim 8, further comprising controlling at least one thermoelectric module to change the diameter of a damping system to eliminate the damper clearance at at least one selected operating point of the gas turbine engine.

11. The method of claim 8, further comprising controlling at least one thermoelectric module to change the diameter of a damping system to achieve a desired damper clearance at at least one selected operating point of the gas turbine engine.

## Patentansprüche

1. Gasturbinentriebwerk (10), das Folgendes umfasst:
einen Rotor,
ein Dämpfersystem (30), das dafür konfiguriert ist, Rotorschwingungen zu dämpfen, wobei das Dämpfersystem (30) einen Dämpfer (60) aufweist, der in einer Dämpfer-Stopfbüchse (62) angeordnet ist und ein Dämpferspiel (68) aufweist,
wenigstens ein thermoelektrisches Modul (70), das dafür konfiguriert ist, durch Ändern eines Durchmessers des Dämpfers und der Dämpfer-Stopfbüchse während des Betriebs des Gasturbinentriebwerks einen gewünschten Wert für das Dämpferspiel zu erreichen.

2. Gasturbinentriebwerk nach Anspruch 1, wobei die Dämpfer-Stopfbüchse im Durchmesser durch eine erste Struktur (64) und eine zweite Struktur (66) definiert wird und das wenigstens eine thermoelektrische Modul (70) dafür konfiguriert ist, das Dämpferspiel durch selektives Erhitzen und Abkühlen der ersten Struktur, des Dämpfers und/oder der zweiten Struktur zu ändern.

3. Gasturbinentriebwerk nach Anspruch 1, wobei der Dämpfer ein Quetschfilmdämpfer ist, der dafür konfiguriert ist, Rotorschwingungen wenigstens zum Teil auf Grundlage einer Größe des Dämpferspiels zu dämpfen.

4. Gasturbinentriebwerk nach Anspruch 3, wobei das wenigstens eine thermoelektrische Modul dafür konfiguriert ist, das Dämpferspiel während des Betriebs des Gasturbinentriebwerks zu beseitigen.

5. Gasturbinentriebwerk nach Anspruch 3, wobei das wenigstens eine thermoelektrische Modul dafür konfiguriert ist, das Dämpferspiel während des Betriebs des Gasturbinentriebwerks zu steuern, um ein gewünschtes Dämpfungsniveau zu erreichen.

6. Gasturbinentriebwerk nach Anspruch 1, wobei das Gasturbinentriebwerk ferner Folgendes umfasst:
ein Lagersystem (28), das ein Lager (40) mit einem Lagerlaufring (44) und einem inneren Lagerspiel (40A) aufweist, und
ein zweites thermoelektrisches Modul (54), das dafür konfiguriert ist, durch Ändern eines Durchmessers des Lagerlaufrings während des Betriebs des Gasturbinentriebwerks einen gewünschten Wert für das innere Lagerspiel zu erreichen.

7. Gasturbinentriebwerk nach Anspruch 1, wobei das Gasturbinentriebwerk ferner Folgendes umfasst:
ein Dichtungssystem (32), das eine Dichtungskomponente (82) und ein Dichtspiel aufweist, und
ein zweites thermoelektrisches Modul (84), das dafür konfiguriert ist, durch Ändern eines Durchmessers der Dichtungskomponente während des Betriebs des Gasturbinentriebwerks einen gewünschten Wert für das Dichtspiel zu erreichen.

8. Verfahren zum Betreiben eines Gasturbinentriebwerks, wobei das Verfahren Folgendes umfasst:
Steuern wenigstens eines thermoelektrischen Moduls (70), um durch Ändern eines Durchmessers eines Dämpfers (60) und einer Dämpfer-Stopfbüchse (62) während des Betriebs des Gasturbinentriebwerks einen gewünschten Wert für ein Dämpferspiel (68) zu erreichen.

9. Verfahren nach Anspruch 8, wobei die Dämpfer-Stopfbüchse im Durchmesser durch eine erste Struktur (64) und eine zweite Struktur (66) definiert wird und wobei das Steuern des wenigstens einen thermoelektrischen Moduls, um einen gewünschten Wert für das Dämpferspiel zu erreichen, durch selektives Erhitzen und Abkühlen der ersten Struktur, des Dämpfers und/oder der zweiten Struktur erreicht wird.

10. Verfahren nach Anspruch 8, das ferner das Steuern wenigstens eines thermoelektrischen Moduls, um den Durchmesser eines Dämpfungssystems zu ändern, um an wenigstens einem ausgewählten Betriebspunkt des Gasturbinentriebwerks das Dämpferspiel zu beseitigen, umfasst.

11. Verfahren nach Anspruch 8, das ferner das Steuern wenigstens eines thermoelektrischen Moduls, um den Durchmesser eines Dämpfungssystems zu ändern, um an wenigstens einem ausgewählten Betriebspunkt des Gasturbinentriebwerks ein gewünschtes Dämpferspiel zu erreichen, umfasst.

## Revendications

1. Moteur à turbine à gaz (10), comprenant :
un rotor ;
un système amortisseur (30) configuré afin d'amortir les oscillations du rotor, le système amortisseur (30) présentant un amortisseur (60) disposé dans un presse-étoupe d'amortisseur (62) et présentant un jeu d'amortisseur (68) ;
au moins un module thermoélectrique (70) configuré afin d'atteindre une valeur souhaitée pour le jeu d'amortisseur en modifiant un diamètre de l'amortisseur et du presse-étoupe d'amortisseur pendant le fonctionnement du moteur à turbine à gaz.

2. Moteur à turbine à gaz selon la revendication 1, dans lequel la presse-étoupe d'amortisseur est défini diamétralement par une première structure (64) et une seconde structure (66), et le au moins un module thermoélectrique est configuré afin de modifier le jeu d'amortisseur en chauffant et en refroidissant sélectivement la première structure, l'amortisseur et/ou la seconde structure.

3. Moteur à turbine à gaz selon la revendication 1, dans lequel l'amortisseur est un coussin à fluide amortisseur configuré afin d'amortir des oscillations du rotor sur la base au moins en partie d'une taille du jeu d'amortisseur.

4. Moteur à turbine à gaz selon la revendication 3, dans lequel le au moins un module thermoélectrique est configuré afin d'éliminer le jeu d'amortisseur pendant le fonctionnement du moteur à turbine à gaz.

5. Moteur à turbine à gaz selon la revendication 3, dans lequel le au moins un module thermoélectrique est configuré afin de contrôler le jeu d'amortisseur pendant le fonctionnement du moteur à turbine à gaz afin d'atteindre un niveau d'amortissement souhaité.

6. Moteur à turbine à gaz selon la revendication 1, dans lequel le moteur à turbine à gaz comprend en outre :
un système de roulement (28) présentant un roulement (40) avec un chemin de roulement (44) et un jeu interne de roulement (40A), et
un second module thermoélectrique (54) configuré afin d'atteindre une valeur souhaitée pour le jeu interne de roulement en modifiant un diamètre du chemin de roulement, pendant le fonctionnement du moteur à turbine à gaz.

7. Moteur à turbine à gaz selon la revendication 1, dans lequel le moteur à turbine à gaz comprend en outre :
un système d'étanchéité (32) présentant un composant d'étanchéité (82) et un jeu d'étanchéité, et
un second module thermoélectrique (84) configuré afin d'atteindre une valeur souhaitée pour le jeu de joint en modifiant un diamètre du composant d'étanchéité pendant le fonctionnement du moteur à turbine à gaz.

8. Procédé de fonctionnement d'un moteur à turbine à gaz, comprenant :
le contrôle d'au moins un module thermoélectrique (70) afin d'atteindre une valeur souhaitée pour un jeu d'amortisseur (68) en modifiant un diamètre d'un amortisseur (60) et d'un presse-étoupe d'amortisseur (62) pendant le fonctionnement du moteur à turbine à gaz.

9. Procédé selon la revendication 8, dans lequel le noyau d'amortisseur est défini diamétralement par une première structure (64) et une seconde structure (66), et dans lequel le contrôle du au moins un module thermoélectrique afin d'atteindre une valeur souhaitée pour le jeu d'amortisseur est atteint en chauffant et en refroidissant sélectivement la première structure, l'amortisseur et/ou la seconde structure.

10. Procédé selon la revendication 8, comprenant en outre le contrôle d'au moins un module thermoélectrique afin de modifier le diamètre d'un système d'amortissement permettant d'éliminer le jeu d'amortisseur en au moins un point de fonctionnement sélectionné du moteur à turbine à gaz.

11. Procédé selon la revendication 8, comprenant en outre le contrôle d'au moins un module thermoélectrique afin de modifier le diamètre d'un système d'amortissement afin d'atteindre un jeu d'amortisseur souhaité en au moins un point de fonctionnement sélectionné du moteur à turbine à gaz.
